# EUROPEAN PATENT APPLICATION

(11) **EP 4 836 009 A1**
(43) Date of publication of application: **04.11.2026**
(21) Application number: 25886459.4
(22) Date of filing: 21.10.2025
(51) Int. Cl.: H01M 4/525, H01M 4/505, H01M 4/36, H01M 4/131, H01M 10/0525, H01M 4/02

(54) **POSITIVE ELECTRODE ACTIVE MATERIAL AND LITHIUM SECONDARY BATTERY COMPRISING SAME**

(30) Priority: 30.10.2024 KR 20240151013
(71) Applicant: EcoPro BM Co., Ltd, Cheongju-si, Chungcheongbuk-do 28116 (KR)
(72) Inventor: LEE, Seul Gi, Cheongju-si, Chungcheongbuk-do 28116 (KR); BAE, Jin Ho, Cheongju-si, Chungcheongbuk-do 28116 (KR); CHOI, Jin Hyeok, Cheongju-si, Chungcheongbuk-do 28116 (KR); SHIN, Se Hee, Cheongju-si, Chungcheongbuk-do 28116 (KR); KIM, Jin Kyu, Cheongju-si, Chungcheongbuk-do 28116 (KR)
(74) Representative: Vossius & Partner Patentanwälte Rechtsanwälte mbB
(86) International application number: PCT/KR2025/016717
(87) International publication number: WO 2026/095465

(57) **Abstract**

The present invention relates to a positive electrode active material and a lithium secondary battery comprising the same, and more particularly, to a positive electrode active material having a polycrystalline structure, the stability of which is improved through morphology control of primary particles, and a lithium secondary battery including the same.

## Description

### BACKGROUND

### 1. Field of the Invention

The present invention relates to a positive electrode active material and a lithium secondary battery comprising the same, and more particularly, to a positive electrode active material having a polycrystalline structure, the stability of which is improved through morphology control of primary particles, and a lithium secondary battery including the same.

### 2. Discussion of Related Art

A battery stores electric power by using materials capable of an electrochemical reaction at a positive electrode and a negative electrode. Among these, a representative example is a lithium secondary battery that stores electric power by using a difference in chemical potential generated during intercalation/deintercalation of lithium ions at a positive electrode and a negative electrode.

The lithium secondary battery is manufactured using materials capable of reversible intercalation/deintercalation of lithium ions as positive and negative electrode active materials, and filling an organic electrolyte solution or a polymer electrolyte solution between the positive electrode and the negative electrode.

As a positive electrode active material of a lithium secondary battery, a lithium transition metal oxide is used, and as examples thereof, composite oxides such as LiCoO₂, LiMn₂O₄, LiNiO₂, LiMnO₂ and the like are being studied.

Among the positive electrode active materials, LiCoO₂ is most widely used because of excellent cycle life characteristics and excellent charge/discharge efficiency; however, its price competitiveness is limited because it is expensive due to resource limitations of cobalt used as a raw material.

Lithium manganese oxides, such as LiMnO₂, LiMn₂O₄ and the like, offer advantages of excellent thermal stability and low cost, but issues of small capacity and poor high-temperature characteristics have been raised. In addition, a LiNiO₂-based positive electrode active material has an advantage of high discharge capacity, but is difficult to synthesize due to cation mixing between Li and Ni, as well as very poor rate characteristics and cycle life characteristics of the synthesized positive electrode active material.

Accordingly, in order to improve low rate characteristics and cycle life characteristics while maintaining the high reversible capacity of LiNiO₂, a ternary-type lithium transition metal oxide such as so-called NCM (Ni-Co-Mn) or NCA (Ni-Co-Al), or a quaternary-type lithium transition metal oxide such as NCMA (Ni-Co-Mn-Al), in which a part of nickel is substituted with cobalt, manganese and/or aluminum, has been developed. Since the reversible capacity becomes lower as the content of nickel in such ternary-type or quaternary-type lithium transition metal oxides is smaller, recently, studies to increase the content of nickel in lithium transition metal oxides have been actively conducted.

However, as the content of nickel in the lithium transition metal oxide increases, cation mixing in the crystal structure increases, thereby degrading stability, or the content of unreacted lithium impurities such as LiOH, Li₂CO₃ and the like on the surface increases. As the content of lithium impurities remaining on the surface of the lithium transition metal oxide increases, gas generation and swelling phenomena in a lithium secondary battery using the lithium transition metal oxide as a positive electrode active material may be promoted. In addition, as the content of lithium impurities remaining on the surface of the lithium transition metal oxide increases, when preparing a paste for forming a positive electrode active material layer using the lithium transition metal oxide, there is a problem that the paste composition undergoes gelation due to the lithium impurities.

Accordingly, there are various attempts to reduce the content of lithium impurities remaining on the surface of the lithium transition metal oxide by coating the surface of the lithium transition metal oxide and to reduce side reactions between the surface of the lithium transition metal oxide and the electrolyte.

In addition, when forming a conductive coating layer on the surface of the lithium transition metal oxide, compared to when forming a non-conductive coating layer on the surface of the lithium transition metal oxide, the conductive coating layer may contribute to improving rate capability by improving ion or electron transport ability mediated by the lithium transition metal oxide. However, unlike a non-conductive coating layer, the electrochemical characteristics of the conductive coating layer vary significantly depending on the continuity and/or thickness of the coating layer. Therefore, when a non-uniform coating layer is formed on the surface of the lithium transition metal oxide, or when the coating material is present in the form of fine particles on the surface of the lithium transition metal oxide, it may be difficult to exhibit stable electrochemical characteristics for a long time due to conductivity variations among particles.

Meanwhile, most lithium transition metal oxides have a secondary particle form having a polycrystalline structure in which a plurality of primary particles are aggregated, and the greater the number of primary particles constituting the secondary particle, the larger the specific surface area becomes. As the specific surface area of the lithium transition metal oxide becomes larger, when strain caused by random volume contraction/expansion of primary particles is accumulated by repeated charging/discharging, cracks (intergranular cracks) may occur between adjacent primary particles. The intergranular cracks present in the secondary particles reduce connectivity between adjacent primary particles, thereby interfering with the lithium-ion transport mechanism. In addition, as the the number of intergranular cracks present in the secondary particles increases, the exposed surface of the primary particles is widened, and side reactions with the electrolyte increase, such that the stability of the positive electrode active material may be rapidly degraded.

### SUMMARY OF THE INVENTION

In the lithium secondary battery market, the growth of lithium secondary batteries for electric vehicles is driving the market, and accordingly, demand for positive electrode active materials used in lithium secondary batteries is also continuously increasing.

For example, conventionally, lithium secondary batteries using lithium iron phosphate (LFP) have mainly been used in terms of ensuring safety, but recently, the use of nickel-based lithium transition metal oxides having a larger energy capacity per weight than LFP has been increasing (although relatively inexpensive LFP is still used in some cases for cost reduction).

In addition, nickel-based lithium transition metal oxides recently mainly used as positive electrode active materials for high-capacity lithium secondary batteries generally have a ternary type composition such as NCM (Ni-Co-Mn) and NCA (Ni-Co-Al), or a quaternary type composition such as NCMA (Ni-Co-Mn-Al).

Accordingly, a positive electrode active material used in a higher-performance lithium secondary battery needs to satisfy both stability and reliability appropriately required even under more severe operating conditions.

Conventionally, in order to alleviate problems occurring as the content of nickel in the lithium transition metal oxide increases, a non-conductive coating layer or a conductive coating layer has been formed on the surface of the lithium transition metal oxide. However, in view of electrochemical characteristics, there is a tendency to prefer a lithium transition metal oxide having a conductive coating layer formed thereon over a non-conductive coating layer.

However, as described above, because the electrochemical characteristics of a conductive coating layer vary significantly depending on the continuity and/or thickness of the coating layer, when a non-uniform coating layer is formed on the surface of the lithium transition metal oxide, or when a coating material is present in the form of fine particles on the surface of the lithium transition metal oxide, it is difficult to exhibit stable electrochemical characteristics for a long time due to variations in conductivity among particles. The excellent continuity of the conductive coating layer means that the conductive coating layer covers the entire surface of the lithium transition metal oxide.

For example, in order to improve the continuity of the conductive coating layer and reduce variations in the conductive coating layer among particles, it is necessary to increase the content of a coating raw material introduced in a coating process for the lithium transition metal oxide. However, when the content of the coating raw material introduced in the coating process for the lithium transition metal oxide is increased, variations in the conductive coating layer among particles may rather increase, or the conductive coating layer may become overall thicker. When the conductive coating layer becomes excessively thick, ion or electron transport capability mediated by the lithium transition metal oxide may be reduced.

In addition, as described above, in order to prevent the lifetime and stability of a ternary type or quaternary type lithium transition metal oxide from deteriorating, it may be considered to induce the growth of primary particles constituting the lithium transition metal oxide, but when growth of the primary particles is induced, the likelihood of intragranular crack formation in the primary particles may increase. As intragranular cracks are present in the primary particles, or as intragranular cracks accumulate in the primary particles through repeated charging/discharging, the lifetime of a lithium secondary battery using the positive electrode active material may inevitably be rapidly reduced.

Accordingly, an object of the present invention is to provide a positive electrode active material capable of improving resistance to strain caused by random volume contraction/expansion of primary particles during repeated charging/discharging by controlling the morphology of the primary particles through dual doping of heterogeneous elements into the lithium transition metal oxide.

In addition, an object of the present invention is to provide a positive electrode active material in which deterioration of electrochemical characteristics due to surface modification is minimized while stability, including lifetime characteristics at room temperature and high temperature, is improved by forming a conductive coating layer that does not change the surface kinetic characteristics of the lithium transition metal oxide having a polycrystalline structure while simultaneously controlling the morphology of primary particles through heat treatment of a mixture of a precursor of the lithium transition metal oxide calcined at a relatively low temperature and a co-doping source before calcination of the lithium transition metal oxide.

In addition, another object of the present invention is to provide a lithium secondary battery using the positive electrode active material defined herein.

The objects of the present invention are not limited to the objects mentioned above, and other objects and advantages of the present invention not mentioned can be understood by the following description and will be more clearly understood by embodiments of the present invention. In addition, it will be readily understood that the objects and advantages of the present invention may be realized by the means and combinations thereof indicated in the claims.

The present invention for solving the above-described technical problem includes the following inventions.
[1] A positive electrode active material including a lithium transition metal oxide capable of lithium intercalation/deintercalation, wherein the lithium transition metal oxide has a secondary particle form in which a plurality of primary particles are aggregated, the lithium transition metal oxide is co-doped with aluminum and boron, and when a distance from the center of the secondary particle to the surface of the secondary particle is denoted by r, the average aspect ratio of primary particles present in a surface portion of the secondary particle in which a distance (d) from the center of the secondary particle satisfies (1/3)r<d≤r is 2.5 or more and less than 5.0.
   The lithium transition metal oxide has a secondary particle form in which a plurality of primary particles are aggregated, and the lithium transition metal oxide is characterized by being co-doped with aluminum and boron. When the lithium transition metal oxide is co-doped with aluminum and boron under predetermined conditions, a change in the aspect ratio of the primary particles constituting the secondary particle may be implemented.
[2] The positive electrode active material according to [1], wherein the average aspect ratio of primary particles present in a center portion of the secondary particle in which a distance (d) from the center of the secondary particle satisfies 0≤d≤(1/3)r is smaller than the average aspect ratio of primary particles present in a surface portion of the secondary particle in which a distance (d) from the center of the secondary particle satisfies (1/3)r<d≤r.
[3] The positive electrode active material according to [1] or [2], wherein the average aspect ratio of primary particles present in the center portion of the secondary particle is 1.5 or less.
[4] The positive electrode active material according to any one of [1] to [3], wherein the aspect ratio of the primary particles has a gradient that increases in a direction from the center of the secondary particle toward the surface of the secondary particle.
[5] The positive electrode active material according to any one of [1] to [4], wherein the lithium transition metal oxide is represented by Chemical Formula 1 below:

   [Chemical Formula 1] LiₐNi_{1-(b+c+d+e)}Co_{b}Mn_{c}M1_{d}M2ₑO₂

   wherein, in Chemical Formula 1,
   M1 is Al and B,
   M2 is at least one selected from Na, K, Mg, Ca, Sr, Ba, Rb, Ce, Hf, Ta, Cr, F, V, Ti, Fe, Zr, Zn, Si, Y, Nb, Ga, Sn, Mo, W, P, Ge, Nd, Gd, and Cu, and
   0.85≤a≤1.15, 0≤b≤0.20, 0≤c≤0.20, 0<d≤0.10, 0≤e≤0.10, and 0<b+c≤0.40.
[6] The positive electrode active material according to any one of [1] to [5], wherein an average crystallite size of the lithium transition metal oxide is 75 nm or more and less than 100 nm.
[7] The positive electrode active material according to any one of [1] to [6], wherein a full width at half-maximum (FWHM) of a peak corresponding to a (104) crystal plane calculated from a diffraction spectrum obtained through X-ray diffraction (XRD) analysis of the positive electrode active material using Cu-Kα radiation is 0.170° to 0.190°.
[8] The positive electrode active material according to any one of [1] to [7], wherein the average particle diameter of the primary particles is 0.1 to 1.0 µm.
[9] The positive electrode active material according to any one of [1] to [8], wherein the average particle diameter of the secondary particles is 2.0 to 16.0 µm.
[10] The positive electrode active material according to any one of [1] to [9], wherein the sum of concentrations (mol%) of aluminum and boron present at interfaces between the primary particles located in the secondary particle is greater than the sum of concentrations (mol%) of aluminum and boron present inside the primary particles.
[11] The positive electrode active material according to any one of [1] to [10], wherein a coating layer containing aluminum and boron is present on the surface of the secondary particle.
[12] The positive electrode active material according to any one of [1] to [11], wherein a coating layer containing aluminum and boron is present at interfaces or gaps between the primary particles located in the secondary particle.
   In addition, the present invention includes other aspects as follows.
[13] A positive electrode including the positive electrode active material according to any one of [1] to [12].
[14] A lithium secondary battery using the positive electrode according to [13].

According to the present invention, intergranular cracks due to accumulation of strain caused by random volume contraction/expansion of the primary particles during repeated charging/discharging can be suppressed and/or alleviated through morphology control of primary particles constituting the lithium transition metal oxide without inducing the growth of the primary particles through high-temperature calcination. Through this, the roomtemperature and high-temperature lifetime characteristics of a lithium secondary battery using the positive electrode active material can be improved.

In addition, according to the present invention, deterioration of electrochemical characteristics due to surface modification can be minimized by forming a conductive coating layer that does not change the surface kinetic characteristics of the lithium transition metal oxide having a polycrystalline structure, along with controlling the morphology of the primary particles through heat treatment of a mixture of a precursor of the lithium transition metal oxide and a co-doping source at a relatively low temperature before calcination of the lithium transition metal oxide.

Along with the above-described effects, specific effects of the present invention will be described together while describing specific matters for carrying out the invention below.

### BRIEF DESCRIPTION OF THE DRAWINGS

FIG. 1 is a cross-sectional SEM image of the lithium transition metal oxide according to Example 1.
FIG. 2 is a cross-sectional SEM image of the lithium transition metal oxide according to Example 2.
FIG. 3 is a cross-sectional SEM image of the lithium transition metal oxide according to Example 3.
FIG. 4 is a cross-sectional SEM image of the lithium transition metal oxide according to Comparative Example 1.
FIG. 5 is a cross-sectional SEM image of the lithium transition metal oxide according to Comparative Example 2.
FIG. 6 is a cross-sectional SEM image of the lithium transition metal oxide according to Comparative Example 3.
FIG. 7 is a cross-sectional SEM image of the lithium transition metal oxide according to Comparative Example 4.
FIG. 8 is a cross-sectional SEM image of the lithium transition metal oxide according to Comparative Example 5.

### DETAILED DESCRIPTION OF EXEMPLARY EMBODIMENTS

In order to more easily understand the present invention, specific terms are defined herein for convenience. Unless otherwise defined herein, scientific terms and technical terms used in the present invention will have meanings generally understood by a person having ordinary skill in the art. In addition, unless specifically specified in the context, terms in a singular form should be understood to include their plural form, and terms in a plural form should be understood to include their singular form.

### Positive electrode active material

Herein, a positive electrode active material includes a lithium transition metal oxide capable of reversible intercalation/deintercalation of lithium ions.

The lithium transition metal oxide is a composite metal oxide capable of intercalation/deintercalation of lithium ions, and has a layered crystal structure belonging to an R-3m space group. The lithium transition metal oxide having a layered crystal structure exhibits a specific peak in a region in which 20 is 18° to 20° among diffraction patterns obtained from XRD analysis.

The lithium transition metal oxide includes at least lithium and a transition metal. The transition metal may include at least one, at least two, or all selected from nickel, cobalt, and manganese.

Preferably, the lithium transition metal oxide may be a lithium nickel-based composite oxide containing nickel. In addition, the lithium transition metal oxide may be a lithium nickel-based composite oxide containing nickel and cobalt.

In order to improve low rate characteristics and lifetime characteristics while maintaining the high reversible capacity of LiNiO₂, the lithium nickel-based composite oxide may be a ternary type such as so-called NCM (Ni-Co-Mn) or NCA (Ni-Co-Al), or a quaternary type lithium transition metal oxide such as NCMA (Ni-Co-Mn-Al), in which part of nickel is substituted with cobalt, manganese, or aluminum. The ternary or quaternary type lithium transition metal oxide may further contain a dopant other than nickel, cobalt, manganese, and aluminum.

In another embodiment, the lithium transition metal oxide may be a cobalt-free type lithium transition metal oxide that does not contain cobalt in bulk particles. The cobalt-free type lithium transition metal oxide may further contain a dopant other than nickel, cobalt, and manganese.

The lithium transition metal oxide has a secondary particle form in which a plurality of primary particles are aggregated. Therefore, the lithium transition metal oxide may be referred to as a secondary particle.

The primary particles constituting the secondary particle may have a spherical shape, a rod shape, an elliptical shape, and/or an irregular shape. In addition, unless specifically intended in a manufacturing process, primary particles having various shapes may be present in the same positive electrode active material. In addition, the primary particle is defined as a particle unit in which a grain boundary is not visible when observed using a scanning electron microscope at a magnification of 5,000x to 20,000x.

The average particle diameter of the primary particle may be 1 µm or less, 0.1 µm or more and 1 µm or less, 0.2 µm or more and 1 µm or less, 0.3 µm or more and 1 µm or less, or 0.4 µm or more and 0.8 µm or less. At this time, the average particle diameter of the primary particle may be the average value of a length in the major axis direction and a length in the minor axis direction of the primary particle ([major axis length+minor axis length]/2). The average value of the length in the major axis direction and the length in the minor axis direction of the primary particle ([major axis length+minor axis length]/2) may be calculated from a cross-sectional SEM image of the secondary particle.

By satisfying the above range of the average particle diameter of the primary particle, the lithium transition metal oxide may form a stable polycrystalline structure. For example, when the average particle diameter of the primary particles constituting the secondary particle is greater than 1 µm, the lithium transition metal oxide is highly likely to have a single particle form consisting of one primary particle and/or a pseudo-single particle form in which 30 or fewer primary particles are aggregated. In this case, the likelihood that an intragranular crack will occur in the primary particle may increase. As an intragranular crack is present in the primary particle, or as intragranular cracks accumulate in the primary particle by repeated charging/discharging, the lifetime of a lithium secondary battery using the positive electrode active material may be rapidly lowered.

Herein, in order to distinguish a polycrystalline structure from a single particle form and a pseudo-single particle form, a secondary particle composed of 50 or more, or 100 or more primary particles may be defined as a polycrystalline structure.

In addition, in a cross-sectional SEM image of the lithium transition metal oxide having a polycrystalline structure, with respect to primary particles lying on a straight line extending through the center of the lithium transition metal oxide along the major axis direction, a grain boundary density calculated by Equation 1 below may be 0.95 or more. [Equation 1] 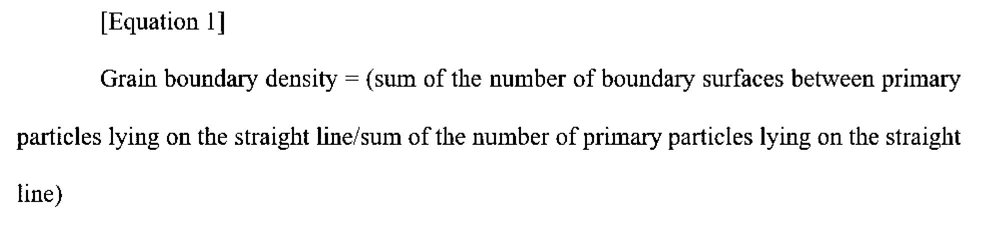 Grain boundary density = (sum of the number of boundary surfaces between primary particles lying on the straight line/sum of the number of primary particles lying on the straight line)

As the grain boundary density calculated by Equation 1 converges to 1, the number of primary particles constituting the lithium transition metal oxide increases, and as the grain boundary density calculated by Equation 1 converges to 0, the number of primary particles constituting the lithium transition metal oxide decreases. When the grain boundary density calculated by Equation 1 is less than 0.95, the lithium transition metal oxide is highly likely to have a single particle form or a pseudo-single particle form rather than a polycrystalline structure.

The average particle diameter (D₅₀) of the secondary particle may be 2.0 µm or more and 16.0 µm or less, 2.0 µm or more and 14.0 µm or less, 2.0 µm or more and 12.0 µm or less, 3.0 µm or more and 16.0 µm or less, 3.0 µm or more and 14.0 µm or less, 3.0 µm or more and 12.0 µm or less, 4.0 µm or more and 16.0 µm or less, 4.0 µm or more and 14.0 µm or less, or 4.0 µm or more and 12.0 µm or less. By satisfying the above range of the average particle diameter (D₅₀) of the secondary particle, the positive electrode active material may have an appropriate level of energy density per unit volume. The average particle diameter (D₅₀) of the secondary particle may vary according to the number of the primary particles constituting the secondary particle.

The average particle diameter of the secondary particle may be measured using a laser diffraction method. For example, it may be measured by dispersing secondary particles in a dispersion medium, introducing them into a commercially available laser diffraction particle size measuring device (for example, Microtrac MT 3000), irradiating ultrasonic waves of about 28 kHz at an output of 60 W, obtaining a volume cumulative particle size distribution graph, and then obtaining a particle size corresponding to 50% of the volume cumulative amount.

Herein, "particle size" is used interchangeably with "particle diameter" or " diameter," and unless otherwise defined, all "average particle diameters" mean the median volume-based particle diameter determined by a laser diffraction method.

Unless otherwise defined, the term "surface portion of a particle" used herein means a region relatively close to the "outermost surface" of the particle, and the term "center portion of a particle" means a region relatively closer to the "exact center" of the particle than the "surface portion."

Accordingly, the "surface portion of a unit particle (primary particle)" means a region relatively close to the "outermost surface" of the unit particle (primary particle), and the "center portion of a unit particle (primary particle)" means a region relatively closer to the "exact center" of the unit particle (primary particle) than the "surface portion."

Likewise, the "surface portion of the secondary particle" means a region relatively close to the "outermost surface" of the secondary particle, and the "center portion of the secondary particle" means a region relatively closer to the "exact center" of the secondary particle than the "surface portion."

At this time, a region excluding the "surface portion of a particle" in any particle may be defined as the "center portion of a particle."

More specifically, herein, when a radius (distance from the center of the secondary particle to the surface of the secondary particle) of the lithium transition metal oxide measured from a cross-sectional SEM image of the lithium transition metal oxide is denoted by r, a region in which a distance (d) from the center of the secondary particle satisfies 0≤d≤(1/3)r may be defined as the center portion of the secondary particle, and a region in which a distance (d) from the center of the secondary particle satisfies (1/3)r<d≤r may be defined as the surface portion of the secondary particle. The outermost region of the surface portion corresponds to the outermost surface of the secondary particle. Therefore, the surface portion of the secondary particle corresponds to a region from a point where a distance (d) from the center of the secondary particle satisfies (1/3)r<d to the outermost surface (d=r) of the secondary particle.

The secondary particle may have a shape that is not a perfect sphere, such as an elliptical shape. Alternatively, irregularities may be present on the surface of the secondary particle. In this case, a diameter of the secondary particle may be calculated from the average value of a major axis length and a minor axis length of the lithium transition metal oxide measured from a cross-sectional SEM image of the secondary particle. Half of the average value of the major axis length and the minor axis length of the lithium transition metal oxide measured from the cross-sectional SEM image of the secondary particle may be used as the radius (r) of the secondary particle.

The lithium transition metal oxide defined herein has a secondary particle form in which a plurality of primary particles are aggregated, the lithium transition metal oxide is characterized by being co-doped with aluminum and boron, and when the lithium transition metal oxide is co-doped with aluminum and boron under predetermined conditions, a change in an aspect ratio of the primary particles constituting the secondary particle may be achieved.

The aspect ratio of the primary particle means the ratio of a major axis length to a minor axis length of the primary particle (major axis length/minor axis length), calculated from a cross-sectional SEM image of the primary particle. The major axis length of the primary particle corresponds to a c-axis length, and the minor axis length may correspond to an a-axis length.

As one example, when a distance from the center of the secondary particle to the surface of the secondary particle is denoted by r, the average aspect ratio of primary particles present in a center portion of the secondary particle, where the distance (d) from the center of the secondary particle satisfies 0≤d≤(1/3)r, may be smaller than the average aspect ratio of the primary particles present in a surface portion of the secondary particle, where the distance (d) from the center of the secondary particle satisfies (1/3)r<d≤r.

The above-described change in the aspect ratio of the primary particle may be achieved through co-doping with aluminum and boron in the primary particle under predetermined conditions.

That is, aluminum strengthens metal-oxygen bonds (M-O bonds) to suppress excessive grain growth and inter-particle aggregation and alleviate structural stress within the crystal, and boron is present in an oxygen lattice or at a grain boundary to correct local defect sites and induce growth in the major axis direction (anisotropic growth) at the surface portion of the primary particle, thereby forming an aspect ratio gradient between the center portion and the surface portion.

Accordingly, the average aspect ratio of primary particles present in the center portion of the secondary particle may be 1.5 or less, and the average aspect ratio of primary particles present in the surface portion of the secondary particle may be 2.5 or more and less than 5.0.

As the aspect ratio of the primary particles exhibits an increasing gradient from the center of the secondary particle toward the surface thereof, resistance to strain caused by random volume contraction/expansion of the primary particles during repeated charging/discharging may be improved.

The average aspect ratio of primary particles present in the center portion of the secondary particle may be calculated as the average value of aspect ratios of selected primary particles after selecting 10% or more, 20% or more, 30% or more, 40% or more, 50% or more, or 60% or more of all primary particles present in the center portion of the secondary particle from a cross-sectional SEM image of the secondary particle, or may be calculated as the average value of aspect ratios of all primary particles present in the center portion of the secondary particle.

When the cross-sectional shape of the primary particle is substantially circular, or when a major axis length and a minor axis length are not significantly different, the aspect ratio of the primary particle is calculated as 1. The average aspect ratio of primary particles present in the center portion of the secondary particle is 1.5 or less, 1.4 or less, or 1.35 or less. When the average aspect ratio of the primary particles present in the center portion of the secondary particle is greater than 1.5, as growth in the major axis direction of the primary particles in the center portion of the secondary particle is excessively induced, it may be difficult to exhibit an increasing gradient from the center of the secondary particle toward the surface of the secondary particle.

The average aspect ratio of primary particles present in the surface portion of the secondary particle may be calculated as the average value of the aspect ratios of primary particles after selecting 10% or more, 20% or more, 30% or more, 40% or more, 50% or more, or 60% or more of all primary particles present in the surface portion of the secondary particle from a cross-sectional SEM image of the secondary particle, or as the average value of the aspect ratios of all primary particles present in the surface portion of the secondary particle.

The average aspect ratio of primary particles present in the surface portion of the secondary particle may be 2.5 or more and less than 5.0, 2.5 or more and 4.5 or less, 2.5 or more and 4.0 or less, or 2.8 or more and 3.8 or less.

When the average aspect ratio of primary particles present in the surface portion of the secondary particle is smaller than 2.5, the growth in the major axis direction of the primary particles in the surface portion of the secondary particle is insufficient, and thus it may be difficult to sufficiently improve resistance to strain caused by random volume contraction/expansion of the primary particles during repeated charging/discharging. On the other hand, when the average aspect ratio of the primary particles present in the surface portion of the secondary particle is 5.0 or more, the specific surface area of the secondary particle may become larger, and side reactions with the electrolyte may increase.

The lithium transition metal oxide may be represented by Chemical Formula 1 below.

LiₐNi_{1-(b+c+d+e)}Co_{b}Mn_{c}M1_{d}M2ₑO₂

Wherein, in Chemical Formula 1, M1 is Al and B, M2 is at least one selected from Na, K, Mg, Ca, Sr, Ba, Rb, Ce, Hf, Ta, Cr, F, V, Ti, Fe, Zr, Zn, Si, Y, Nb, Ga, Sn, Mo, W, P, Ge, Nd, Gd, and Cu, and 0.85≤a≤1.15, 0≤b≤0.20, 0≤c≤0.20, 0<d≤0.10, 0≤e≤0.10, and 0<b+c≤0.40.

In Chemical Formula 1, a, which represents a ratio of lithium to all metal elements other than lithium among the lithium transition metal oxide, may be 0.85 or more, 0.90 or more, 0.95 or more, 0.96 or more, 0.97 or more, 0.98 or more, 0.99 or more, 1.00 or more, 1.01 or more, 1.02 or more, 1.03 or more, 1.04 or more, or 1.05 or more. In addition, a may be 1.15 or less, 1.14 or less, 1.13 or less, 1.12 or less, 1.11 or less, 1.10 or less, 1.09 or less, 1.08 or less, 1.07 or less, 1.06 or less, or 1.05 or less. The upper and lower limits of the molar fraction of lithium to all elements other than lithium in the lithium transition metal oxide may be appropriately selected within the above-described range.

When a in Chemical Formula 1 is less than 0.85, the capacity of the positive electrode active material including the lithium transition metal oxide represented by Chemical Formula 1 may be reduced. On the other hand, when a in Chemical Formula 1 is greater than 1.15, phase separation may occur due to lithium and manganese present in an excessive amount in the lithium transition metal oxide, and an impurity phase belonging to a space group other than the R-3m space group may occur.

In Chemical Formula 1, 1-(b+c+d+e), which represents a molar fraction of nickel to all metal elements other than lithium among the lithium transition metal oxide, may be 0.50 or more, 0.60 or more, 0.70 or more, 0.80 or more, or 0.90 or more. In addition, 1-(b+c+d+e) may be less than 1.0, 0.99 or less, 0.98 or less, 0.97 or less, or 0.96 or less. The upper and lower limits of the molar fraction of nickel to all elements other than lithium in the lithium transition metal oxide may be appropriately selected within the above-described range. When the molar fraction of nickel in the lithium transition metal oxide satisfies the above range, a stable crystal structure may be formed and high energy density may be exhibited.

In Chemical Formula 1, b, which represents a molar fraction of cobalt to all metal elements other than lithium among the lithium transition metal oxide, may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, or 0.02 or less. When the lithium transition metal oxide is a cobalt-free type lithium transition metal oxide, b may be 0. When the lithium transition metal oxide contains cobalt, b may be greater than 0, 0.01 or more, or 0.02 or more. The upper and lower limits of the molar fraction of cobalt to all elements other than lithium in the lithium transition metal oxide may be appropriately selected within the above-described range. When the molar fraction of cobalt in the lithium transition metal oxide satisfies the above range, a stable crystal structure may be formed and good output characteristics may be exhibited.

In Chemical Formula 1, c, which represents a molar fraction of manganese to all metal elements other than lithium among the lithium transition metal oxide, may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, or 0.02 or less. When the lithium transition metal oxide contains manganese, c may be greater than 0, 0.01 or more, or 0.02 or more. The upper and lower limits of the molar fraction of manganese to all elements other than lithium in the lithium transition metal oxide may be appropriately selected within the above-described range. When the molar fraction of manganese in the lithium transition metal oxide satisfies the above range, a stable crystal structure may be formed.

When the lithium transition metal oxide contains a dopant M2 other than M1, e in Chemical Formula 1 is greater than 0. In addition, when the lithium transition metal oxide contains the dopant M2, e, which represents the molar fraction of the dopant to all metal elements other than lithium in the lithium transition metal oxide, may be 0.10 or less, 0.05 or less, 0.04 or less, 0.03 or less, 0.02 or less, or 0.01 or less.

When the lithium transition metal oxide optionally contains a dopant, the dopant may contain at least one selected from Na, K, Mg, Ca, Sr, Ba, Rb, Ce, Hf, Ta, Cr, F, V, Ti, Fe, Zr, Zn, Si, Y, Nb, Ga, Sn, Mo, W, P, Ge, Nd, Gd, and Cu, preferably at least one selected from Mg, Ca, Ti, Zr, Mo, W, and P, more preferably at least one selected from Ca, Ti, Zr, and W.

The type and combination of the dopant may be appropriately selected within a range that does not negatively affect electrochemical characteristics and stability of the positive electrode active material.

In Chemical Formula 1, d, which represents a molar fraction of aluminum and boron to all metal elements other than lithium in the lithium transition metal oxide, may be 0.10 or less, 0.05 or less, 0.04 or less, 0.03 or less, 0.02 or less, or 0.01 or less.

As described above, the lithium transition metal oxide co-doped with aluminum (Al) and boron (B) under predetermined conditions may form a structural gradient in which the aspect ratio of primary particles constituting secondary particles gradually changes.

The aspect ratio gradient formed as described above also affects microcrystal growth behavior in a high-temperature calcination step, thereby stabilizing the average crystallite size of the co-doped lithium transition metal oxide within a range of 75 nm or more and less than 100 nm, preferably 75 nm or more and 90 nm or less.

The average crystallite size of the lithium transition metal oxide may be quantitatively analyzed through X-ray diffraction analysis (XRD) using Cu-Kα radiation. Specifically, the average crystallite size of lithium transition metal oxide may be calculated by Rietveld refinement of an X-ray diffraction pattern in a 2θ=10° to 120° region obtained through XRD analysis of a positive electrode active material including the lithium transition metal oxide.

When the average crystallite size of the lithium transition metal oxide defined herein is less than 75 nm or 100 nm or more, an improvement effect on electrochemical characteristics such as rate characteristics of a lithium secondary battery using the lithium transition metal oxide as a positive electrode active material may be insignificant. In addition, when the average crystallite size is 100 nm or more, since resistance increases, a polarization phenomenon may occur, and cracks in particles due to the polarization phenomenon may occur, which eventually leads to a decrease in the lifetime of the positive electrode active material.

In addition, the full width at half-maximum (FWHM) of a peak corresponding to a (104) crystal plane, as calculated from a diffraction spectrum of the positive electrode active material obtained through X-ray diffraction (XRD) analysis using Cu-Kα radiation, may be 0.170° to 0.190°.

A peak present in a 2θ=44.5±1.0° region in the diffraction spectrum of the positive electrode active material obtained through X-ray diffraction (XRD) analysis using Cu-Kα radiation is a peak specific to the (104) crystal plane of the lithium transition metal oxide having an R-3m layered crystal structure, and exhibits the strongest peak intensity in the 2θ=44.5±1.0° region.

The FWHM(104) of the lithium transition metal oxide co-doped with aluminum and boron under predetermined conditions may range from 0.170° to 0.190°, preferably 0.174° to 0.185°, more preferably 0.1742° to 0.1821°.

The fact that the lithium transition metal oxide co-doped with aluminum and boron under predetermined conditions exhibits an FWHM(104) in a range of 0.170° to 0.190° indicates that co-doping with aluminum and boron did not have a meaningful effect on deformation of the crystal structure of the (104) plane. In addition, it may mean that a diffraction peak of the (104) plane may appear relatively sharper and more symmetrical than that of an undoped or single-doped lithium transition metal oxide.

As the lithium transition metal oxide co-doped with aluminum and boron under predetermined conditions exhibits an FWHM(104) in the range of 0.170° to 0.190°, microstrain in a crystal may be appropriately alleviated and the coordination environment of transition metal ions in the crystallites may be maintained uniformly.

In particular, aluminum strengthens oxygen-metal bonds to improve structural stability, and boron is present in an oxygen lattice or at a grain boundary and serves to correct lattice defects, thereby suppressing cation mixing and improving crystallinity.

Therefore, the co-doped lithium transition metal oxide having an FWHM(104) value within the above-described range may prevent structural collapse during charging/discharging by suppressing inhomogeneity or stress accumulation in the crystal structure, and as a result, may exhibit excellent lifetime characteristics and output characteristics.

A coating layer may be present on at least a part of the surface of the lithium transition metal oxide. The coating layer may be present in an island form on a part of the surface of the lithium transition metal oxide. In addition, the coating layer may be present on the surface of the primary particle and/or the secondary particle. The coating layer may diffuse from the surface portion of the secondary particle toward the center portion of the secondary particle along grain boundaries between the primary particles.

The coating layer located in the secondary particle may be present at interfaces or gaps between the primary particles. The interface between the primary particles means a grain boundary formed by neighboring primary particles that are in contact with each other. The gap between the primary particles means a space between neighboring primary particles that are not in direct contact with each other, and may also be referred to as a pore.

The coating layer may contain aluminum and boron. By forming a coating layer containing aluminum and boron on the surface of the lithium transition metal oxide, side reactions between the lithium transition metal oxide and the electrolyte may be reduced, and through this, the stability and lifetime of a lithium secondary battery using the lithium transition metal oxide defined herein as a positive electrode active material may be improved.

The coating layer may include at least one oxide selected from aluminum oxide, lithium-aluminum oxide, lithium-boron oxide, and lithium-aluminum-boron oxide. Preferably, the coating layer may include lithium-aluminum-boron oxide, or may include lithium-aluminum-boron oxide and at least one oxide selected from aluminum oxide, lithium-aluminum oxide, and lithium-boron oxide. In addition, it is preferable that the coating layer does not include boron oxide not complexed with lithium (for example, HBO₂, which is a reaction intermediate phase of a boron-containing raw material).

The oxide present in the coating layer may be represented by Chemical Formula 3 below.

[Chemical Formula 3] Li_{g}M3ₕOᵢ

Wherein, in Chemical Formula 3, M3 is at least one selected from Al and B, 0≤g≤8, 0≤h≤15, and 2≤i≤20, excluding a case in which g and h are simultaneously 0. In addition, in Chemical Formula 3, g, h, and i represent values determined from a stoichiometric ratio according to the valence (oxidation number) of M3. For example, g, h, and i may be appropriately selected in ranges of 0≤g≤8, 0≤h≤8, and 2≤i≤13, respectively. In addition, when M3 in Chemical Formula 3 is B, g is not 0.

More specifically, the oxide represented by Chemical Formula 3 may be Li_{g}AlₕOᵢ, Li_{g}BₕO₁, Li_{g}(Al/B)ₕOᵢ, or AlₕOᵢ, and non-limiting examples thereof include Al₂O₃, Li₅AlO₄, LiBO₂, Li₂B₄O₇, Li₃BO₃, Li₂B₅AlO₁₀, LiB₄Al₇O₁₇, Li₃AlB₂O₆, and the like.

The coating layer may be present as in the form of a coating film having an average film thickness of 1 nm to 300 nm, 10 nm to 200 nm, or 30 nm to 100 nm on the surface of the lithium transition metal oxide. The thickness of the coating layer may be measured through EDX analysis of coating elements based on a cross-sectional SEM image of the lithium transition metal oxide. That the coating layer is present in the form of a coating film should be distinguished from an oxide constituting the coating layer being dispersed and attached in the form of individual particles to the surface of the lithium transition metal oxide.

In addition, the coating layer may be formed in an island shape that discontinuously occupies the surface of the lithium transition metal oxide.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S₅-LiX (where X is a halogen element such as I or Cl), L₁₂S-P₂S₅-Li₂O, Li₂S-P₂S₃-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ(where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of positive electrode active material

### Example 1

### (a) Preparation of precursor

A spherical Ni_{0.92}Co_{0.04}Mn_{0.04}(OH)₂ hydroxide precursor was synthesized by a coprecipitation method. Specifically, 50 wt% NaOH(aq) and 18 wt% NH₄OH(aq) were introduced into a 1.5 M composite transition metal sulfate aqueous solution in which nickel sulfate, cobalt sulfate, and manganese sulfate were mixed at a molar ratio of 92:4:4 in a 90 L reactor.

The pH in the reactor was maintained at 12.0 and the temperature was maintained at 40 °C, and a precursor synthesis reaction was performed for 24 hours while introducing N₂ gas into the reactor. After completion of the reaction, the precursor was separated, washed with deionized water, and dried at 120 °C for 10 hours to obtain a Ni_{0.92}Co_{0.04}Mn_{0.04}(OH)₂ hydroxide precursor having a volume-based average particle diameter (D₅₀) of 14.4 µm measured by laser diffraction analysis.

### (b) First heat treatment - Preparation of first intermediate product

The Ni_{0.92}Co_{0.04}Mn_{0.04}(OH)₂ hydroxide precursor obtained in step (a) and LiOH (Li/(Ni+Co+Mn) molar ratio = 1.04) were mixed to prepare a mixture. Subsequently, the mixture was heat-treated in a furnace under an O₂ atmosphere at 400 °C for 8 hours to obtain a first intermediate product.

### (c) Second heat treatment - Preparation of second intermediate product

The first intermediate product obtained in step (b) was heat-treated in a furnace under an O₂ atmosphere at 730 °C for 10 hours to obtain a second intermediate product.

### (d) Third heat treatment - Preparation of final product

The second intermediate product obtained in step (c), Al₂O₃ (weighed so that the content of aluminum is 0.5 mol% with respect to all metal elements excluding lithium in the intermediate product), and H₃BO₃ (weighed so that the content of boron is 0.5 mol% with respect to all metal elements excluding lithium in the intermediate product) were mixed to prepare a mixture. Subsequently, the mixture was heat-treated in a furnace under an O₂ atmosphere at 730 °C for 10 hours to obtain a final product.

### Example 2

A positive electrode active material was prepared in the same manner as in Example 1, except that the first heat treatment temperature of step (b) was 450 °C.

### Example 3

A positive electrode active material was prepared in the same manner as in Example 1, except that the first heat treatment temperature of step (b) was 500 °C.

### Comparative Example 1

A positive electrode active material was prepared in the same manner as in Example 1, except that the first heat treatment temperature of step (b) was 300 °C.

### Comparative Example 2

A positive electrode active material was prepared in the same manner as in Example 1, except that the first heat treatment temperature of step (b) was 600 °C.

### Comparative Example 3

A positive electrode active material was prepared in the same manner as in Example 1, except that the second intermediate product obtained in step (c) and Al₂O₃ (weighed so that the content of aluminum is 0.5 mol% with respect to all metal elements excluding lithium in the intermediate product) were mixed to prepare a mixture, and the mixture was heat-treated in a furnace under an O₂ atmosphere at 730 °C for 10 hours to obtain a final product.

### Comparative Example 4

A positive electrode active material was prepared in the same manner as in Example 1, except that the second intermediate product obtained in step (c) and H₃BO₃ (weighed so that the content of boron is 0.5 mol% with respect to all metal elements excluding lithium in the intermediate product) were mixed to prepare a mixture, and the mixture was heat-treated in a furnace under an O₂ atmosphere at 730 °C for 10 hours to obtain a final product.

### Comparative Example 5

### (a) Preparation of precursor

A spherical Ni_{0.92}Co_{0.04}Mn_{0.04}(OH)₂ hydroxide precursor was synthesized by a coprecipitation method. Specifically, 50 wt% NaOH(aq) and 18 wt% NH₄OH(aq) were introduced into a 1.5 M composite transition metal sulfate aqueous solution in which nickel sulfate, cobalt sulfate, and manganese sulfate were mixed at a molar ratio of 92:4:4 in a 90 L reactor.

The pH in the reactor was maintained at 12.0 and the temperature was maintained at 40 °C, and a precursor synthesis reaction was performed for 24 hours while introducing N₂ gas into the reactor. After completion of the reaction, the precursor was separated, washed with deionized water, and dried at 120 °C for 10 hours to obtain a Ni_{0.92}Co_{0.04}Mn_{0.04}(OH)₂ hydroxide precursor having a volume-based average particle diameter (D₅₀) of 14.4 µm measured by laser diffraction analysis.

### (b) First heat treatment - Preparation of first intermediate product

The Ni_{0.92}Co_{0.04}Mn_{0.04}(OH)₂ hydroxide precursor obtained in step (a) and LiOH (Li/(Ni+Co+Mn) molar ratio = 1.04) were mixed to prepare a mixture. Subsequently, the mixture was heat-treated in a furnace under an O₂ atmosphere at 730 °C for 10 hours to obtain a first intermediate product.

### (c) Second heat treatment - Preparation of final product

The first intermediate product obtained in step (b), Al₂O₃ (weighed so that the content of aluminum is 0.5 mol% with respect to all metal elements excluding lithium in the intermediate product), and H₃BO₃ (weighed so that the content of boron is 0.5 mol% with respect to all metal elements excluding lithium in the intermediate product) were mixed to prepare a mixture. Subsequently, the mixture was heat-treated in a furnace under an O₂ atmosphere at 730 °C for 10 hours to obtain a final product.

### Preparation Example 2. Preparation of lithium secondary battery (half-cell)

A positive electrode slurry was prepared by dispersing 94 wt% of each positive electrode active material prepared according to Preparation Example 1, 3 wt% of carbon black, and 3 wt% of a PVDF binder in 30 g of N-methyl-2 pyrrolidone (NMP). The positive electrode slurry was uniformly applied to an aluminum thin film having a thickness of 15 µm and vacuum-dried at 135 °C, thereby preparing a positive electrode for a lithium secondary battery.

A half-cell was prepared using lithium foil as a counter electrode for the positive electrode, a porous polyethylene film (Celgard 2300, thickness: 25 µm) as a separator, and an electrolyte containing LiPF₆ at a concentration of 1.15 M in a solvent in which ethylene carbonate and ethyl methyl carbonate were mixed at a volume ratio of 3:7.

### Experimental Example 1. Analysis of particle shape of positive electrode active material

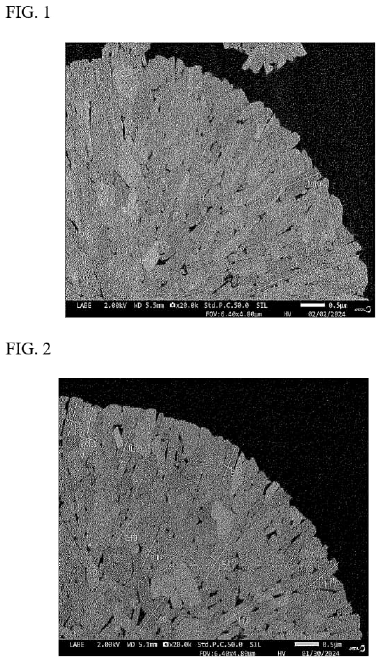

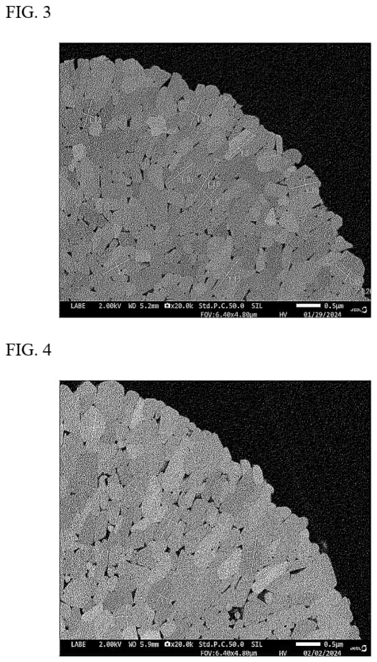

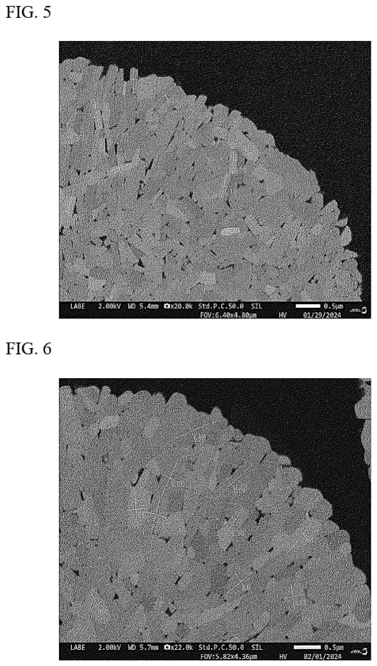

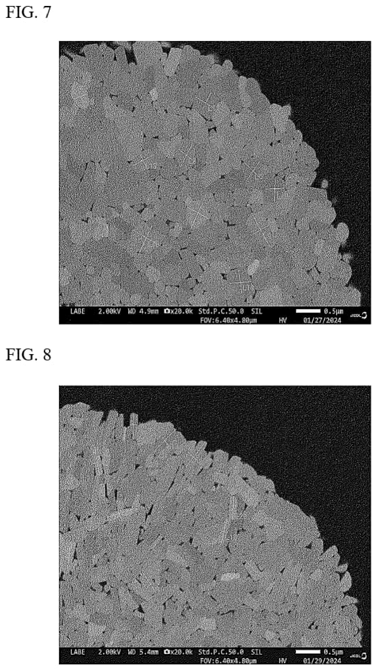

For each of the positive electrode active materials prepared in Preparation Example 1, the lithium transition metal oxide was cross-sectioned using an ion milling device to obtain a cross-sectional SEM image, and a change in aspect ratio of primary particles observed from the cross-sectional SEM image was confirmed using an image analysis program (Image-Pro image analysis software for SEM) (see FIGS. 1 to 8).

In addition, for each lithium transition metal oxide (secondary particle), when a distance from the center of the secondary particle to the surface of the secondary particle is defined as r, the average aspect ratio of all primary particles present in a center portion of the secondary particle in which a distance (d) from the center of the secondary particle satisfies 0≤d≤(1/3)r and the average aspect ratio of all primary particles present in a surface portion of the secondary particle in which a distance (d) from the center of the secondary particle satisfies (1/3)r<d≤r were calculated.

The aspect ratio of the primary particle was calculated as a ratio (major axis length/minor axis length) of the major axis length and the minor axis length, where the major axis length (nm) was defined as the longest straight line passing through the center of the primary particle in the cross-sectional SEM image, and the minor axis length (nm) was defined as the shortest straight line passing through the center of the primary particle. When the cross-sectional shape of the primary particle was substantially circular, the aspect ratio of the primary particle was calculated as 1.

The calculation results are shown in Table 1 below.

**[Table 1]**

| Classification | Center portion average aspect ratio | Surface portion average aspect ratio |
|---|---|---|
| Example 1 | 1.35 | 3.74 |
| Example 2 | 1.32 | 3.03 |
| Example 3 | 1.33 | 2.86 |
| Comparative Example 1 | 1.18 | 1.97 |
| Comparative Example 2 | 1.20 | 2.42 |
| Comparative Example 3 | 1.12 | 2.46 |
| Comparative Example 4 | 1.19 | 1.24 |
| Comparative Example 5 | 1.32 | 1.28 |

Referring to the results of Table 1, it can be confirmed that, when the hydroxide precursor is subjected to pre-thermal treatment at a low temperature (400 to 500 °C) before calcination at a relatively high temperature (700 °C or higher), an aspect ratio gradient of the primary particles is formed between the center portion and the surface portion of the lithium transition metal oxide due to co-doping with aluminum and boron, and that the average aspect ratio of the primary particles in the surface portion of the lithium transition metal oxide is 2.5 or more.

However, it can be confirmed that, when the pre-thermal treatment temperature is excessively low (300 °C) or excessively high (600 °C), the difference in aspect ratio of the primary particles between the center portion and the surface portion of the lithium transition metal oxide is reduced. It is expected that, when the pre-thermal treatment temperature is excessively low (300 °C), as dissolved H₃BO₃ causes the primary particles to grow in random directions, primary particles in the surface portion of the lithium transition metal oxide did not sufficiently grow in the major axis direction. On the other hand, when the pre-thermal treatment temperature is excessively high (600 °C), it can be confirmed that dissolution of LiOH occurs to induce growth in the minor axis direction of primary particles, and accordingly, the aspect ratio of primary particles in the surface portion of the lithium transition metal oxide is reduced.

Meanwhile, even when the hydroxide precursor is subjected to pre-thermal treatment at a low temperature (400 to 500 °C) before calcination at a relatively high temperature (700 °C or higher), if aluminum is used alone, the growth of the primary particles in the surface portion of the lithium transition metal oxide may be insufficient.

In addition, even when the hydroxide precursor is subjected to pre-thermal treatment at a low temperature (400 to 500 °C) before calcination at a relatively high temperature (700 °C or higher), if boron is used alone, it can be confirmed that an aspect ratio gradient of the primary particles is scarcely formed between the center portion and the surface portion of the lithium transition metal oxide. When the hydroxide precursor is not subjected to pre-thermal treatment at a low temperature (400 to 500 °C) before calcination at a relatively high temperature (700 °C or higher), it can be confirmed that an aspect ratio gradient of the primary particles is scarcely formed between the center portion and the surface portion of the lithium transition metal oxide even when aluminum and boron are co-doped.

### Experimental Example 2. XRD analysis of positive electrode active material

X-ray diffraction (XRD) analysis was performed on each of the positive electrode active materials prepared according to Preparation Example 1 to determine the average crystallite size and c-axis length of the lithium transition metal oxide included in the positive electrode active material.

XRD analysis was performed using a Bruker D8 Advance diffractometer using Cu-Kα radiation (1.540598 Å).

A full width at half-maximum (FWHM) of the peak corresponding to the (104) crystal plane (2θ=44.5±1.0° region) of an R-3m layered crystal structure was calculated from a diffraction spectrum of the positive electrode active material obtained through X-ray diffraction (XRD) analysis using Cu-Kα radiation.

The average crystallite size was calculated from a straight line obtained by plotting a diffraction angle θ (rad) and a full width at half-maximum (FWHM), β (rad), within a 2θ=10° to 120° region on a coordinate plane having sinθ as the horizontal axis and βcasθ as the vertical axis, through Rietveld refinement of the diffraction spectrum of the positive electrode active material obtained through X-ray diffraction (XRD) analysis using Cu-Kα radiation.

The results of the XRD analysis are shown in Table 2 below.

**[Table 2]**

| Classification | FWHM(104) (°) | Crystallite size (nm) |
|---|---|---|
| Example 1 | 0.1742 | 80.9 |
| Example 2 | 0.1821 | 80.2 |
| Example 3 | 0.1789 | 79.8 |
| Comparative Example 1 | 0.1709 | 85.1 |
| Comparative Example 2 | 0.1727 | 73.1 |
| Comparative Example 3 | 0.1561 | 103.5 |
| Comparative Example 4 | 0.1752 | 72.2 |
| Comparative Example 5 | 0.173 | 72.8 |

In addition, in the diffraction spectra of the positive electrode active materials according to Examples 1 to 3, peaks specific to Li₂B₄O₇, LiAlO₂, LiAl₅O₅, LiAlB₂O₅, and Li₂AlB₅O₁₀ could be observed. From these results, it can be expected that a coating layer containing aluminum and boron is formed on the lithium transition metal oxide (the surface of the secondary particle and the interface or gap between the primary particles located in the secondary particle).

### Experimental Example 3. Evaluation of electrochemical characteristics of lithium secondary battery (half-cell)

For the lithium secondary battery (half-cell) prepared in Preparation Example 2, initial charge capacity, initial discharge capacity, initial efficiency, and 2.0C/0.1C rate characteristics were measured through a charging/discharging experiment under conditions of a discharge rate of 2.0C/0.1C at 25 °C and a voltage range of 3.0 V to 4.3 V using an electrochemical analysis device (Toyo, Toscat-3100).

In addition, after the same lithium secondary battery (half-cell) was charged/discharged for 50 cycles under conditions of 45 °C, a voltage range of 3.0 V to 4.3 V, and 1C/1C using an electrochemical analysis device (Toyo, Toscat-3100), the ratio of discharge capacity at the 50th cycle to the initial capacity (cycle capacity retention) was measured.

The measurement results are shown in Table 3 below.

**[Table 3]**

| Classification | Charge capacity (mAh/g) | Discharge capacity (mAh/g) | Initial efficiency (%) | 2.0C/0.1C Rate (%) | **Capacity retention** (%) |
|---|---|---|---|---|---|
| Example 1 | 236.6 | 209 | 88.3 | 78.4 | 91.3 |
| Example 2 | 238.7 | 213.5 | 89.4 | 80.5 | 90.9 |
| Example 3 | 230.3 | 201.3 | 87.4 | 79.1 | 90.3 |
| Comparative Example 1 | 228.6 | 196.1 | 85.8 | 73.3 | 87.1 |
| Comparative Example 2 | 231.1 | 202.1 | 87.5 | 74.9 | 87.2 |
| Comparative Example 3 | 235.4 | 207.4 | 88.1 | 75.6 | 86.1 |
| Comparative Example 4 | 237.1 | 210.4 | 88.7 | 75.2 | 86.3 |
| Comparative Example 5 | 226.6 | 195.4 | 86.2 | 74.5 | 86.5 |

Comparing the results of Examples 1 to 3 with the results of Comparative Examples 1 to 5, it can be confirmed that capacity characteristics, initial efficiency, and rate characteristics were not substantially reduced even after co-doping with aluminum and boron as defined herein, and rather, discharge capacity and rate characteristics were improved.

In addition, it can be confirmed that the high-temperature (45 °C) capacity retention of lithium secondary batteries using the positive electrode active materials according to Examples 1 to 3 was significantly improved compared with that of lithium secondary batteries using the positive electrode active materials according to Comparative Examples 1 to 5. From the above results, it can be confirmed that, due to co-doping with aluminum and boron, an aspect ratio gradient of the primary particles is formed between the center portion and the surface portion of the lithium transition metal oxide, and when the average aspect ratio of primary particles in the surface portion of the lithium transition metal oxide is 2.5 or more, it can contribute to improving the stability of the positive electrode active material having a polycrystalline structure.

Although the embodiments of the present invention have been described above, a person having ordinary skill in the art will be able to variously modify and change the present invention by addition, change, deletion, or addition of components and the like within a range not departing from the spirit of the present invention described in the claims, and this will also be included within the scope of rights of the present invention.

## Claims

1. A positive electrode active material comprising a lithium transition metal oxide capable of lithium intercalation/deintercalation,
wherein the lithium transition metal oxide has a secondary particle form in which a plurality of primary particles are aggregated,
the lithium transition metal oxide is co-doped with aluminum and boron, and
when a distance from the center of the secondary particle to the surface of the secondary particle is denoted by r, the average aspect ratio of primary particles present in a surface portion of the secondary particle in which a distance (d) from the center of the secondary particle satisfies (1/3)r<d≤r is 2.5 or more and less than 5.0.

2. The positive electrode active material according to claim 1, wherein the average aspect ratio of primary particles present in a center portion of the secondary particle in which a distance (d) from the center of the secondary particle satisfies 0≤d≤(1/3)r is smaller than the average aspect ratio of primary particles present in a surface portion of the secondary particle in which a distance (d) from the center of the secondary particle satisfies (1/3)r<d≤r.

3. The positive electrode active material according to claim 2, wherein the average aspect ratio of primary particles present in the center portion of the secondary particle is 1.5 or less.

4. The positive electrode active material according to claim 1, wherein the aspect ratio of the primary particles exhibits a gradient that increases in a direction from the center of the secondary particle toward the surface of the secondary particle.

5. The positive electrode active material according to claim 1, wherein the lithium transition metal oxide is represented by Chemical Formula 1 below:
[Chemical Formula 1] LiₐNi_{1-(b+c+d+e)}Co_{b}Mn_{c}M1_{d}M2ₑO₂
wherein, in Chemical Formula 1,
M1 is Al and B,
M2 is at least one selected from Na, K, Mg, Ca, Sr, Ba, Rb, Ce, Hf, Ta, Cr, F, V, Ti, Fe, Zr, Zn, Si, Y, Nb, Ga, Sn, Mo, W, P, Ge, Nd, Gd, and Cu, and
0.85≤a≤1.15, 0≤b≤0.20, 0≤c≤0.20, 0<d≤0.10, 0≤e≤0.10, and 0<b+c≤0.40.

6. The positive electrode active material according to claim 1, wherein an average crystallite size of the lithium transition metal oxide is 75 nm or more and less than 100 nm.

7. The positive electrode active material according to claim 1, wherein a full width at half-maximum (FWHM) of a peak corresponding to a (104) crystal plane calculated from a diffraction spectrum obtained through X-ray diffraction (XRD) analysis of the positive electrode active material using Cu-Kα radiation is 0.170° to 0.190°.

8. The positive electrode active material according to claim 1, wherein the average particle diameter of the primary particles is 0.1 to 1.0 µm.

9. The positive electrode active material according to claim 1, wherein the average particle diameter of the secondary particles is 2.0 to 16.0 µm.

10. The positive electrode active material according to claim 1, wherein the sum of concentrations (mol%) of aluminum and boron present at interfaces between the primary particles located in the secondary particle is greater than the sum of concentrations (mol%) of aluminum and boron present inside the primary particles.

11. The positive electrode active material according to claim 1, wherein a coating layer comprising aluminum and boron is present on the surface of the secondary particle.

12. The positive electrode active material according to claim 1, wherein a coating layer comprising aluminum and boron is present at interfaces or gaps between the primary particles located in the secondary particle.

13. A positive electrode comprising the positive electrode active material according to any one of claims 1 to 12.

14. A lithium secondary battery using the positive electrode according to claim 13.
